# EUROPÄISCHE PATENTSCHRIFT

(11) **EP 3 449 135 B1**
(45) Veröffentlichungstag und Bekanntmachung des Hinweises auf die Patenterteilung: **08.12.2021**
(21) Anmeldenummer: 17703099.6
(22) Anmeldetag: 01.02.2017
(51) Int. Cl.: F16B 5/00

(54) **DOPPELVERBINDER ZUM STOSSVERBINDEN ZWEIER BAUTEILE**
DOUBLE CONNECTOR FOR BUTT-CONNECTING TWO COMPONENTS
ÉLÉMENT DE RACCORDEMENT DOUBLE SERVANT À RÉALISER UN ABOUTAGE DE DEUX PIÈCES

(30) Priorität: 25.04.2016 DE 202016102175 U
(43) Veröffentlichungstag der Anmeldung: 06.03.2019
(73) Patentinhaber: Häfele SE & Co KG, 72202 Nagold (DE)
(72) Erfinder: NITSCHMANN, Gunter, 72285 Pfalzgrafenweiler (DE); ARNOLD, Lorenz, CH-6314 Unterägeri (CH)
(74) Vertreter: Kohler Schmid Möbus Patentanwälte
(86) Internationale Anmeldenummer: PCT/EP2017/052088
(87) Internationale Veröffentlichungsnummer: WO 2017/186363

(56) Entgegenhaltungen:
- WO-A1-2015/015603
- GB-A- 1 280 536
- US-A- 637 141
- US-A- 3 954 345

## Beschreibung

Die Erfindung betrifft einen Doppelverbinder zum Stoßverbinden zweier Bauteile gemäß dem Oberbegriff von Anspruch 1 und eine Anordnung mit einem solchen Doppelverbinder.

Ein solcher Doppelverbinder zum Stoßverbinden zweier Bauteile ist beispielsweise durch die US 637 141 A bekannt geworden.

Zum Stoßverbinden zweier Möbelteile sind beispielsweise Exzenter-Verbindungsbeschläge bekannt, bei denen ein Bolzen in das eine Möbelteil eingeschraubt und ein verdrehbarer Exzenter in eine Bohrung des anderen Möbelteils eingesetzt wird. Mithilfe eines Werkzeugs wird der Exzenter gedreht und dadurch der Bolzen angezogen, bis beide Möbelteile aneinander anliegen.

Der aus der eingangs genannten US 637 141 A bekannte Doppelverbinder umfasst einen Bolzen und zwei Hülsen, welche in Zapfenlöcher zweier zu verbindender Bauteile eingesetzt werden. Anschließend wird der Bolzen in die beiden Hülsen eingesteckt, wodurch Hülsenlaschen nach außen abgespreizt und in den Bauteile verankert werden und der Bolzen mit den beiden Hülsen verrastet ist.

Es ist demgegenüber die Aufgabe der vorliegenden Erfindung, einen Verbinder anzugeben, mit dem zwei Bauteile, wie z.B. zwei Möbelplatten, werkzeuglos und unsichtbar miteinander befestigt werden können. Zudem soll der Verbinder plattenstärkenunabhängig immer in der Mitte der Platten sitzen.

Diese Aufgabe wird erfindungsgemäß durch einen Doppelverbinder zum Stoßverbinden zweier Bauteile mit den Merkmalen von Anspruch 1 gelöst.

Erfindungsgemäß sind die beiden Spreizmuffen jeweils in die Bohrungen der Bauteile eingesetzt und die zusammengeschobenen Spreizlaschen durch den Führungsbolzen jeweils nach außen aufgespreizt. In der Montagestellung sind die Spreizmuffen einerseits durch die aufgespreizten Spreizlaschen fest in den Bohrungswandungen der Bauteile verankert und andererseits gegen ein Zurückschieben gesichert. Wenn der unrunde Außenumfang der Spreizmuffe durch die Bohrung auf den runderen Außenumfang, insbesondere auf den runden bzw. nahezu runden Außenumfang, zwangsverformt worden ist, ist der Führungsbolzen entweder bereits komplett freigegeben (entrastet), oder eine noch vorhandene geringfügige Verrastung kann mit einem kleinen Schlag einfach überwunden werden. Ein unabsichtliches Zusammendrücken ist somit verhindert (Transport- und Fehlbediensicherung). Der erfindungsgemäße Doppelverbinder kann universell zum Verbinden zweier beliebiger, auch unterschiedlicher Bauteile eingesetzt werden, beispielsweise in der Möbelbranche zum Verbinden zweier Möbelteile oder in der Automobil- oder Medizintechnik.

Vorzugsweise sind die beiden Bolzenenden jeweils als ein Bolzenkopf ausgebildet, der in der Montagestellung die jeweilige Spreizmuffe in deren Zusammenschieberichtung verrastend hintergreift. Alternativ können die beiden Spreizmuffen in der Montagestellung auch direkt miteinander verrastet und dadurch gegen ein Zurückschieben gesichert sein.

Vorteilhaft weist der mittlere Bolzenabschnitt einen die Montagestellung definierenden Anschlag auf, an dem die beiden Spreizmuffen in der Montagestellung anliegen können.

Vorzugsweise weist die mindestens eine Spreizlasche an ihrer Außenseite jeweils eine querverlaufende Außenrippe zum Eindrücken in die Bohrungswandung auf.

Im Fall einer Spreizmuffe mit mehreren Spreizlaschen sind besonders bevorzugt die hinteren Stirnseiten zumindest einiger der Spreizlaschen, insbesondere aller Spreizlaschen der Spreizmuffe, jeweils axial zueinander versetzt, um in unterschiedlichen axialen Positionen mit dem Bolzenkopf zu verrasten und so ein unterschiedlich tiefes Eindrücken der Spreizmuffen bzw. des Tiefenanschlags in das Plattenmaterial auszugleichen. Je nachdem, wie stark sich die Spreizmuffen bzw. die Tiefenanschläge in die Bauteile eindrücken, kann in der Montagestellung ein Spalt von bis 2mm zwischen den Spreizmuffen bestehen.

Über einen Tiefenanschlag in Form eines Randkragens am vorderen Ende der Spreizmuffe kann das Einsetzen der Spreizmuffe in eine Bohrung des Bauteils begrenzt werden.

Der Doppelverbinder kann entweder aus Einzelteilen zusammengesteckt sein oder als ein einstückiges Kunststoff-Spritzgussteil mit einem Führungsbolzen aus Kunststoff oder als ein einstückiges Kunststoff-Spritzgussteil mit dem Führungsbolzen als Einlegeteil ausgebildet sein.

Vorzugsweise sind die Spreizmuffen mit Leim gefüllt, der dann beim Zusammenschieben der Spreizmuffen herausgedrückt wird.

Die Erfindung betrifft schließlich auch eine Anordnung mit zwei aneinander anliegenden Bauteilen und mit einem wie oben ausgebildeten Doppelverbinder, der mit seinen Spreizmuffen in Bohrungen der Bauteile eingesetzt ist, wobei die Spreizmuffen auf dem Führungsbolzen zusammengeschoben und in dieser Montagestellung verrastet sind und wobei die Spreizlaschen durch den Führungsbolzen jeweils nach außen aufgespreizt sind. Die beiden Spreizmuffen sind entweder auf dem Führungsbolzen verrastet oder direkt miteinander verrastet. Vorzugsweise sind die Spreizmuffen in der Montagestellung bis zur gegenseitigen Anlage zusammengeschoben.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fign. 1a, 1b: den erfindungsgemäßen Doppelverbinder mit zwei Spreizmuffen in ihren jeweils äußeren Muffenendlagen auf einem Führungsbolzen in einer ersten Seitenansicht (Fig. 1a) und in einer Querschnittansicht (Fig. 1b) gemäß Ib-Ib in Fig. 1a;
- Fign. 2a, 2b: den in Fig. 1 gezeigten Doppelverbinder in einer gegenüber Fig. 1 um 90° gedrehten zweiten Seitenansicht (Fig. 2a) und in einer Quer-schnittansicht (Fig. 2b) gemäß IIb-IIb in Fig. 2a;
- Fign. 3a, 3b: den Doppelverbinder mit seinen beiden jeweils in eine Bohrung eingesetzten Spreizmuffen in einer der Fig. 2a entsprechenden Seitenansicht (Fig. 3a) und in einer Querschnittansicht (Fig. 3b) gemäß IIIb-IIIb in Fig. 3a; und
- Fig. 4: den Doppelverbinder mit seinen beiden bis zur gegenseitigen Anlage auf dem Führungsbolzen zusammengeschobenen Spreizmuffen in einer Seitenansicht.

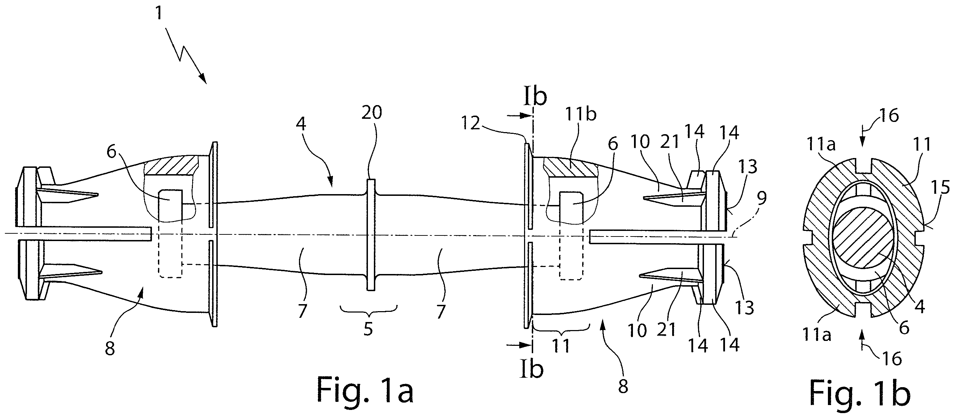

Der in **Fign. 1 bis 4** gezeigte Doppelverbinder **1** dient zum Stoßverbinden zweier flächig aneinander anliegender Möbelteile **2,** die jeweils eine Aufnahmebohrung **3** aufweisen.

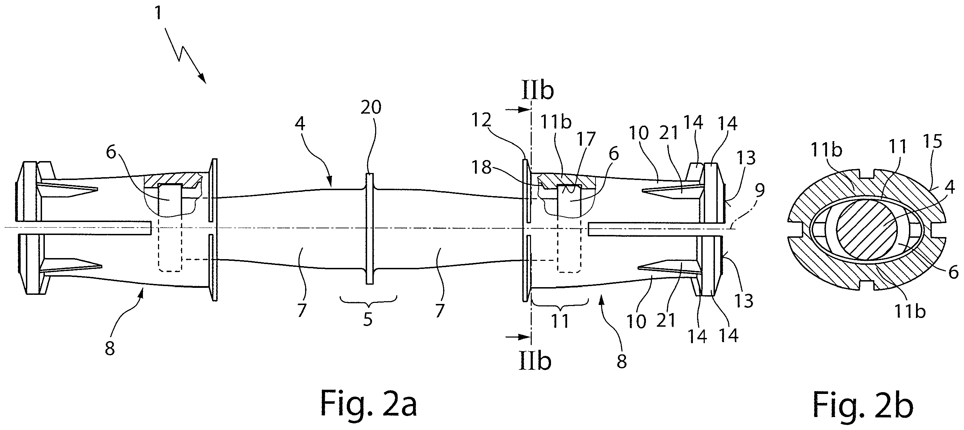

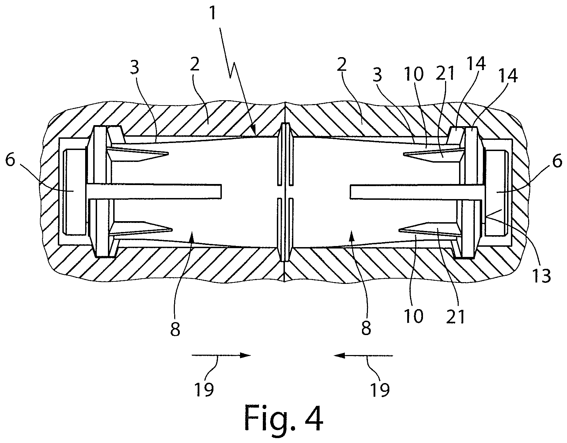

Der Doppelverbinder 1 umfasst einen Führungsbolzen **4,** der zu beiden Seiten eines mittleren Bolzenabschnitts **5** jeweils einen in Richtung auf das jeweilige Bolzenende **6** verjüngten Bolzenabschnitt **7** aufweist, sowie zwei auf dem Führungsbolzen 4 verschiebbar geführte Spreizmuffen **8,** die jeweils aus einer äußeren Muffenendlage (Fign. 1a, 2a) zum mittleren Bolzenabschnitt 5 hin bis in eine Montagestellung (Fig. 4) zusammenschiebbar sind, in der die beiden Spreizmuffen 8 aneinander anliegen können und gegen ein Zurückschieben verrastet sind. Die Spreizmuffen 8 weisen jeweils mehrere (hier beispielhaft vier), drehsymmetrisch um die Muffenlängsachse **9** herum angeordnete Spreizlaschen **10** auf, die in der Montagestellung durch den Führungsbolzen 4 nach außen aufgespreizt sind. Die beiden Bolzenenden 6 sind jeweils als Bolzenköpfe ausgebildet.

Der Führungsbolzen 4 ist im gezeigten Ausführungsbeispiel spiegelsymmetrisch zu seiner Mittelebene, kann aber alternativ auch asymmetrisch, z.B. mit zwei unterschiedlich verjüngten Bolzenabschnitten 7, ausgebildet sein. Die beiden Spreizmuffen 8 sind im gezeigten Ausführungsbeispiel baugleich, können aber alternativ auch unterschiedlich ausgebildet sein.

Die Spreizmuffen 8 weisen jeweils einen Hülsenabschnitt **11** auf, der an seinem der jeweils anderen Spreizmuffe zugewandten, vorderen Hülsenende mit einem Randkragen **12** abschließt. Vom anderen, hinteren Hülsenende erstrecken sich die Spreizlaschen 10 mit ihren freien Laschenenden nach hinten, wobei die hinteren Stirnseiten **13** der vier Spreizlaschen 11 nicht auf der gleichen axialen Höhen enden, sondern jeweils um 0,25mm zueinander versetzt sind. An ihren Außenseiten weisen die Spreizlaschen 10 jeweils noch eine querverlaufende, krallenförmige Außenrippe **14** auf.

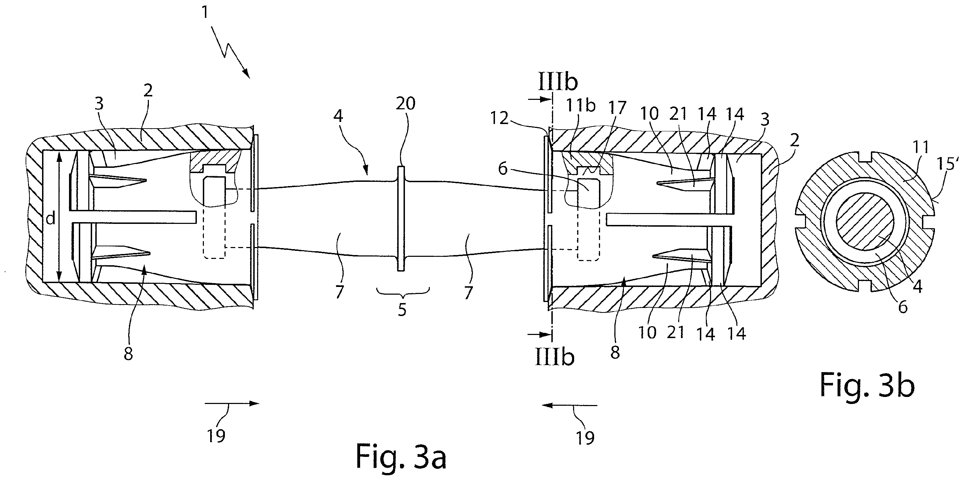

In der äußeren Muffenendlage weist der Hülsenabschnitt 11 einen ovalen bzw. elliptischen Außenumfang **15** (Fign. 1b, 2b) auf, welcher durch Zusammendrücken des Hülsenabschnitts 11 entlang der Hauptachse des elliptischen Außenumfangs, also in Richtung der Pfeile **16,** auf einen in etwa runden Außenumfang **15'** verformt werden kann (Fig. 3b). Der Innendurchmesser des auf den runden Außenumfang 15' verformten Hülsenabschnitts 11 entspricht dabei dem Durchmesser des mittleren Bolzenabschnitts 5.

In den beiden einander gegenüberliegenden Hülsensegmenten **11a,** in denen der elliptische Außenumfang 15 des unverformten Hülsenabschnitts 11 über den späteren ungefähr runden Außenumfang 15' des verformten Hülsenabschnitts 11 radial nach außen übersteht, also in den Hülsensegmenten um die beiden Hauptscheitelpunkte des elliptischen Außenumfangs 15 herum, verjüngt sich der Hülsenabschnitt 11 kontinuierlich bzw. stufenlos nach hinten. Im gezeigten Ausführungsbeispiel verjüngt sich der unverformte Hülsenabschnitt 11 auf seinem gesamten Außenumfang kontinuierlich bzw. stufenlos nach hinten.

In den beiden einander gegenüberliegenden Hülsensegmenten **11b**, in denen der elliptische Außenumfang 15 des unverformten Hülsenabschnitts 11 über den späteren ungefähr runden Außenumfang 15' des verformten Hülsenabschnitts 11 nicht radial nach außen übersteht, also in den Hülsensegmenten um die beiden Nebenscheitelpunkte des elliptischen Außenumfangs 15 herum, weist der Hülsenabschnitt 11 innenseitig jeweils eine als Innennut ausgebildete Rastvertiefung **17** mit einer vorgeordneten Auflaufschräge **18** auf.

Der Doppelverbinder 1 wird wie folgt aus seinen Einzelteilen zusammengesetzt. Die beiden Spreizmuffen 8 werden mit ihren Randkragen 12 voran auf den jeweiligen Bolzenkopf 6 des Führungsbolzens 6 aufgeschoben. Dabei wird der Innendurchmesser des Hülsenabschnitts 11 durch die beiden Auflaufschrägen 18 auf den Durchmesser des Bolzenkopfes 6 elastisch aufgeweitet, bis der Hülsenabschnitt 11 mit seinen beiden Rastvertiefungen 17 auf dem Bolzenkopf 6 verrastet ist (Fig. 2a) und die Spreizmuffe 8 dadurch auf dem Führungsbolzen 4 lagefixiert ist. Durch diese Lagefixierung ist der Doppelverbinder 1 gegen unbeabsichtigtes Zusammendrücken der beiden Spreizmuffen 8 gesichert (Transportsicherung). Die elastische Federwirkung der Hülsenabschnitte 11 wird also zur Verrastung auf den Bolzenenden 6 ausgenutzt.

Alternativ kann der Doppelverbinder auch als ein einstückiges Kunststoff-Spritzgussteil hergestellt sein, und zwar entweder mit einem Führungsbolzen 4 aus Kunststoff oder mit dem Führungsbolzen 4 (z.B. aus Zink oder Stahl) als Einlegeteil.

Der Doppelverbinder 1 wird mit seinen verrasteten Spreizmuffen 8 voran jeweils in die runden Bohrungen 3 der Möbelteile 2 eingesteckt, bis die Spreizmuffen 8 mit ihren Randkragen 12 an den Möbelteilen 2 anliegen. Da der Bohrungsdurchmesser d kleiner als die Hauptachse des elliptischen Außenumfangs 15 des unverformten Hülsenabschnitts 11 ist, werden beim Eintreten des Hülsenabschnitts 11 in die Bohrung 3 die überstehenden Umfangssegmente 11a aufgrund ihrer Verjüngung in Richtung der Pfeile 16 auf den Bohrungsdurchmesser d zusammengedrückt. Dadurch werden gleichzeitig die beiden anderen Umfangssegmente 11b soweit auseinandergedrückt, dass ihre innenseitige Rastvertiefung 17 nicht mehr bzw. nur noch geringfügig auf dem Bolzenkopf 6 verrastet sind (Fig. 3a). Indem der ursprünglich elliptische Außenumfang 15 des Hülsenabschnitts 11 nunmehr auf den dem Bohrungsdurchmesser d entsprechenden ungefähr runden Außenumfang 15' verformt ist, ist die Blockierung der Spreizmuffen 8 auf dem Führungsbolzen 4 aufgehoben, und die beiden Spreizmuffen 8 können weiter zusammengeschoben werden. Mit anderen Worten wird der Führungsbolzen 4 erst dann, wenn der elliptische Außenumfang 15 des Hülsenabschnitts 11 durch die Bohrung 3 auf den runden Außenumfang 15' rundgedrückt worden ist, freigegeben und kann die Spreizlaschen 10 aufspreizen (Fehlbediensicherung). Eine nach der Zwangsverformung noch vorhandene geringfügige Verrastung kann mit einem kleinen Schlag einfach überwunden werden.

Abschließend werden die beiden Möbelteile 2 bis zur gegenseitigen Anlage zusammengeschoben, wodurch der Führungsbolzen 4 mit seinen Bolzenköpfen 6 weiter in die Spreizmuffen 8 eingeschoben wird. Die beiden Spreizmuffen 8 werden dabei jeweils in Richtung **19** weiter auf den mittleren Bolzenabschnitt 5 bis in ihre Montagestellung zusammengeschoben (Fig. 4), in der sie sowohl aneinander als auch in der Bolzenmitte an einem radial nach außen überstehenden Anschlag (Anschlagring) **20** des Führungsbolzens 4 anliegen können. Der Anschlag 20 verhindert ein zu weites einseitiges Aufschieben der Spreizmuffen 8. Beim Zusammenschieben der Spreizmuffen 8 werden die Spreizlaschen 10 auf dem verjüngten Bolzenabschnitt 7 immer weiter nach außen aufgespreizt, wodurch die Querrippen 14 in die Wandung der Bohrung 3 eingedrückt werden. Damit die Spreizlaschen 10 beim Aufspreizen nicht abknicken, weist jede Spreizlasche 10 auf ihrer Außenseite eine sich axial erstreckende Verstärkungsrippe **21** auf.

In der Montagestellung der Fig. 4 ist mindestens eine der vier Spreizlaschen 10 mit ihrer hinteren Stirnseite 13 am Bolzenkopf 6 vorbeigeschoben und von diesem in der jeweiligen Schieberichtung 19 hintergriffen, wodurch die Spreizmuffe 8 gegen ein Zurückschieben gesichert ist. In der Montagestellung sind die Randkragen 12 in die Möbelteile 2 vollständig eingedrückt, so dass die beiden Möbelteile 2 spaltfrei aneinander anliegen. Die beiden Spreizmuffen 8 sind einerseits durch die Querrippen 14 ihrer aufgespreizten Spreizlaschen 10 fest in den Bohrungswandungen der Möbel 2 verankert und andererseits durch ihre Verrastung am Führungsbolzen 4 aneinander gesichert, so dass die beiden Möbelteile 2 aneinander befestigt sind. Die gesamte Verbindungsmontage der beiden Möbelteile 2 mittels des Doppelverbinders 1 erfolgt somit vollständig werkzeuglos.

Die hinteren Stirnseiten 13 der Spreizlaschen 10 sind deshalb zueinander axial versetzt, um ein unterschiedlich tiefes Eindrücken der Randkragen 12 in das Plattenmaterial auszugleichen. Bei einem 90°-Stoß zweier als Möbelplatten ausgebildeter Möbelteile 2 befindet sich die eine Bohrung in der Plattenfläche der einen Möbelplatte und die andere in der Stirnseite der zweiten Möbelplatte. Der Doppelverbinder 1 wird sich in die stirnseitige Bohrung eindrücken, da hier die weiche Mittelschicht der Spanplatte vorliegt, welche nur wenig Widerstand bieten kann. Da es nicht bekannt ist, wie tief sich der Doppelverbinder 1 eindrückt, muss hierfür ein Ausgleich geschaffen werden, was über die vier verschiedenen axialen Positionen der hinteren Stirnseiten 13 erfolgt. Wenn alle hinteren Stirnseiten 13 auf der gleichen axialen Höhe endeten, ergäben sich zwei Fälle der gegenseitigen Verrastung: Entweder die Verbindung wackelt, da zwischen den hinteren Stirnseiten 13 und dem Bolzenkopf 6 zu viel Spiel vorhanden ist, oder die Verrastungsposition kann gar nicht erreicht werden, wenn der Doppelverbinder 1 zu tief in die weiche Stirnkante eingegraben ist und die hinteren Stirnseiten 13 den Bolzenkopf 6 daher nicht hintergreifen. Je nachdem, wie stark sich die Spreizmuffen 8 bzw. die Randkragen 12 in die Möbelteile 2 eindrücken, kann in der Montagestellung ein Spalt von bis 2mm zwischen den Spreizmuffen 8 bestehen.

Da die Spreizmuffe 8 "überspreizt" werden muss, damit sie auf dem Bolzenkopf 6 verrasten kann, sind die mit dem Führungsbolzen 4 zusammenwirkenden Innenseiten der Spreizlaschen 10 nicht identisch bzw. zueinander drehsymmetrisch, sondern so ausgelegt, dass die Spreizkraft bestmöglich verteilt wird.

Statt wie im gezeigten Ausführungsbeispiel mit dem Führungsbolzen 4 zu verrasten, können die Spreizmuffen 8 alternativ in der Montagestellung auch direkt miteinander verrasten, z.B. mittels Rasthaken, welche die jeweils andere Spreizmuffe 8 in der Montagestellung rastend hintergreifen und dadurch die Spreizmuffen 8 gegen ein Auseinanderschieben sichern.

Optional zu der reinen Verrastung und Verkrallung kann auch Leim (z.B. Weißleim) hinzugegeben werden, um die sowieso als nicht demontierbar ausgelegte Verbindung noch stabiler zu machen. Hierbei wird der Leim nicht in die Bohrung, sondern vor der Endmontage direkt in entsprechende Hohlräume der Spreizmuffen 8 gegeben. Vorteil ist eine definierte Position und Dosierung des Leims dort, wo dieser benötigt wird. Beim Zusammenschieben (Endmontage) wird der Leim dann herausgedrückt. Eine mögliche zusätzliche Verleimung wird umso wichtiger, da die Plattenqualität kontinuierlich sinkt (aus Kostengründen). Um den Halt des Leims am Doppelverbinder 1 ohne Tropfen zu gewährleisten, kann ein spezieller niedrigviskoser Leim verwendet werden. Der Doppelverbinder 1 kann folglich universell mit oder ohne Leimzugabe eingesetzt werden, je nach Anwendungsfall.

Der Doppelverbinder 1 kann nicht nur, wie im gezeigten Ausführungsbeispiel, zum Verbinden zweier Möbelteile 2, sondern universell zum Verbinden zweier beliebiger, auch unterschiedlicher Bauteile eingesetzt werden. Es sind prinzipiell auch Anwendungen in der Automobil- oder Medizintechnik bzw. anderen Branchen möglich.

## Patentansprüche

1. Doppelverbinder (1) zum Stoßverbinden zweier Bauteile (2),
mit einem Führungsbolzen (4), der zu beiden Seiten eines mittleren Bolzenabschnitts (5) jeweils einen in Richtung auf das jeweilige Bolzenende (6) verjüngten Bolzenabschnitt (7) aufweist, und
mit zwei auf dem Führungsbolzen (4) verschiebbar geführten, insbesondere baugleichen Spreizmuffen (8), die jeweils aus einer äußeren Muffenendlage zum mittleren Bolzenabschnitt (5) hin bis in eine Montagestellung zusammenschiebbar sind, in der die beiden Spreizmuffen (8) gegen ein Zurückschieben verrastet sind, wobei die Spreizmuffen (8) jeweils mindestens eine Spreizlasche (10) aufweisen, die in der Montagestellung durch den Führungsbolzen (4) nach außen aufgespreizt ist,
**dadurch gekennzeichnet,**
**dass** die Spreizmuffen (8) jeweils einen Hülsenabschnitt (11) aufweisen, der in der äußeren Muffenendlage einen unrunden, insbesondere ovalen oder elliptischen Außenumfang (15) aufweist, welcher durch Zusammendrücken des Hülsenabschnitts (11) entlang der Langachse des unrunden Außenumfangs (15), insbesondere entlang der Hauptachse des ovalen oder elliptischen Außenumfangs, auf einen runderen Außenumfang (15'), insbesondere einen runden bzw. nahezu runden Außenumfang (15'), verformbar ist, und
**dass** der Hülsenabschnitt (11) in mindestens einem derjenigen Hülsensegmente (11b), die bei unverformtem Hülsenabschnitt (11) über den Außenumfang (15') des verformten Hülsenabschnitts (11) nicht nach außen überstehen, innenseitig eine Rastvertiefung (17) aufweist, wobei in der äußeren Muffenendlage die Rastvertiefung (17) bei unverformtem Hülsenabschnitt (11) auf dem Bolzenende (6) verrastet ist und bei verformtem Hülsenabschnitt (11) auf dem Bolzenende (6) nicht mehr oder nur noch geringfügig verrastet ist.

2. Doppelverbinder nach Anspruch 1, **dadurch gekennzeichnet, dass** die beiden Spreizmuffen (8) in der Montagestellung aneinander anliegen.

3. Doppelverbinder nach Anspruch 1 oder 2, **dadurch gekennzeichnet, dass** die beiden Bolzenenden jeweils als ein Bolzenkopf (6) ausgebildet sind, der in der Montagestellung die jeweilige Spreizmuffe (8) in deren Zusammenschieberichtung (19) verrastend hintergreift.

4. Doppelverbinder nach einem der vorhergehenden Ansprüche, **dadurch gekennzeichnet, dass** der Innendurchmesser des auf den runden bzw. nahezu runden Außenumfang (15') verformten Hülsenabschnitts (11) dem Durchmesser des mittleren Bolzenabschnitts (5) entspricht.

5. Doppelverbinder nach einem der vorhergehenden Ansprüche, **dadurch gekennzeichnet, dass** sich der Hülsenabschnitt (11) zumindest in denjenigen Hülsensegmenten (11a), die bei unverformtem Hülsenabschnitt (11) über den Außenumfang (15') des verformten Hülsenabschnitts (11) nach außen überstehen, nach hinten verjüngt.

6. Doppelverbinder nach einem der vorhergehenden Ansprüche, **dadurch gekennzeichnet, dass** der mittlere Bolzenabschnitt (5) einen Anschlag (20) aufweist, an dem die beiden Spreizmuffen (8) in der Montagestellung anliegen können.

7. Doppelverbinder nach einem der vorhergehenden Ansprüche, **dadurch gekennzeichnet, dass** in der Montagestellung die mindestens eine Spreizlasche (10) mit ihrer hinteren Stirnseite (13) an dem als Bolzenkopf (18) ausgebildeten Bolzenende vorbeigeschoben und von diesem in der jeweiligen Schieberichtung (19) hintergriffen ist.

8. Doppelverbinder nach einem der vorhergehenden Ansprüche, **dadurch gekennzeichnet, dass** die mindestens eine Spreizlasche (10) an ihrer Außenseiten eine querverlaufende Außenrippe (14) aufweist.

9. Doppelverbinder nach einem der vorhergehenden Ansprüche, **dadurch gekennzeichnet, dass** die Spreizmuffen (8) jeweils mehrere, insbesondere drehsymmetrisch um ihre Muffenlängsachse (9) herum angeordnete Spreizlaschen (10) aufweisen, wobei die hinteren Stirnseiten (13) zumindest einiger der Spreizlaschen (10) der Spreizmuffe (8), insbesondere aller Spreizlaschen (10) der Spreizmuffe (8), jeweils axial zueinander versetzt sind.

10. Doppelverbinder nach einem der vorhergehenden Ansprüche, **dadurch gekennzeichnet, dass** die Spreizmuffen (8) an ihrem vorderen Ende jeweils einen Randkragen (12) aufweist, der das Einsetzen der Spreizmuffe (8) in eine Bohrung (3) des Bauteils (2) begrenzt.

11. Doppelverbinder nach einem der vorhergehenden Ansprüche, **dadurch gekennzeichnet, dass** die Spreizmuffen (8) auf den Führungsbolzen (4) aufgesteckt sind.

12. Doppelverbinder nach einem der Ansprüche 1 bis 10, **dadurch gekennzeichnet, dass** der Doppelverbinder (1) als ein einstückiges Kunststoff-Spritzgussteil mit einem Führungsbolzen (4) aus Kunststoff oder als ein einstückiges Kunststoff-Spritzgussteil mit dem Führungsbolzen (4) als Einlegeteil gebildet ist.

13. Doppelverbinder nach einem der vorhergehenden Ansprüche, **dadurch gekennzeichnet, dass** die Spreizmuffen (8) mit Leim gefüllt sind.

14. Anordnung mit zwei aneinander anliegenden Bauteilen (2) und mit einem Doppelverbinder (1) nach einem der vorhergehenden Ansprüche, der mit seinen Spreizmuffen (8) in Bohrungen (3) der Bauteile (2) eingesetzt ist, wobei die Spreizmuffen (8) auf dem Führungsbolzen (4) zusammengeschoben und in dieser Montagestellung verrastet sind und wobei die Spreizlaschen (10) durch den Führungsbolzen (4) jeweils nach außen aufgespreizt sind.

15. Anordnung nach Anspruch 14, **dadurch gekennzeichnet, dass** die Spreizmuffen (8) in der Montagestellung bis zur gegenseitigen Anlage zusammengeschoben sind.

## Claims

1. A double connector (1) for butt-connecting two components (2)
comprising a guide bolt (4) having a respective bolt section (7) tapering in the direction of each bolt end (6) on both sides of a middle bolt section (5), and
comprising two in particular identically constructed spreading sockets (8) which are movably guided on the guide bolt (4) and which in each case can be pushed together from an outer socket end position toward the middle bolt section (5) into a mounted position, in which the two spreading sockets (8) are latched against being pushed back, wherein the spreading sockets (8) each have at least one spreading tab (10) which is spread outwardly via the guide bolt (4) in the mounted position,
**characterized in that** the spreading sockets (8) in each case comprise a sleeve section (11) which in the outer socket end position comprises an unround, in particular oval or elliptical, outer periphery (15) which by pressing together the sleeve section (11) along the long axis of the unround outer periphery (15), in particular along the main axis of the oval or elliptical outer periphery, is deformable to a more round outer periphery (15'), in particular a round or almost round outer periphery (15'), and
that in at least one of those sleeve segments (11b) which, when the sleeve section (11) is undeformed, do not protrude outwardly over the outer periphery (15') of the deformed sleeve section (11), the sleeve section (11) comprises a latching recess (17) on the inner face, wherein in the outer socket end position the latching recess (17), when the sleeve section (11) is undeformed, is latched to the bolt end (6) and, when the sleeve section (11) is deformed, is no longer or only slightly latched to the bolt end (6).

2. The double connector as claimed in claim 1, **characterized in that** the two spreading sockets (8) bear against one another in the mounted position.

3. The double connector as claimed in claim 1 or 2, **characterized in that** the two bolt ends in each case are configured as a bolt head (6) which in the mounted position engages in a latching manner behind the respective spreading socket (8) in the pushed-together direction (19) thereof.

4. The double connector as claimed in one of the preceding claims, **characterized in that** the internal diameter of the sleeve section (11) deformed to the round or almost round outer periphery (15') corresponds to the diameter of the middle bolt section (5).

5. The double connector as claimed in one of the preceding claims, **characterized in that** the sleeve section (11) tapers to the rear, at least in those sleeve segments (11a) which protrude outwardly when the sleeve section (11) is not deformed over the outer periphery (15') of the deformed sleeve section (11).

6. The double connector as claimed in one of the preceding claims, **characterized in that** the middle bolt section (5) comprises a stop (20), the two spreading sockets (8) in the mounted position being able to bear thereagainst.

7. The double connector as claimed in one of the preceding claims, **characterized in that** in the mounted position the at least one spreading tab (10) is pushed with its rear front face (13) past the bolt end configured as bolt head (18) and is engaged from behind by the bolt head (18) in the respective pushing direction (19).

8. The double connector as claimed in one of the preceding claims, **characterized in that** the at least one spreading tab (10) on its outer face comprises a transversely extending outer rib (14).

9. The double connector as claimed in one of the preceding claims, **characterized in that** the spreading sockets (8) in each case comprise a plurality of spreading tabs (10), in particular arranged rotationally symmetrically around the longitudinal socket axis (9), wherein the rear front faces (13) of at least some of the spreading tabs (10) of the spreading socket (8), in particular of all of the spreading tabs (10) of the spreading socket (8), in each case are axially offset to one another.

10. The double connector as claimed in one of the preceding claims, **characterized in that** the spreading sockets (8) at their front end in each case comprise an edge flange (12) which limits the insertion of the spreading socket (8) into a bore (3) of the component (2).

11. The double connector as claimed in one of the preceding claims, **characterized in that** the spreading sockets (8) are stuck onto the guide bolt (4).

12. The double connector as claimed in one of claims 1 to 10, **characterized in that** the double connector (1) is formed as an integral plastics injection-molded part with a guide bolt (4) made of plastics or as an integral plastics injection-molded part with the guide bolt (4) as an insert part.

13. The double connector as claimed in one of the preceding claims, **characterized in that** the spreading sockets (8) are filled with glue.

14. An arrangement comprising two components (2) which bear against one another and comprising a double connector (1) as claimed in one of the preceding claims, which is inserted with its spreading sockets (8) in bores (3) of the components (2), wherein the spreading sockets (8) are pushed together on the guide bolt (4) and in this mounted position are latched and wherein the spreading tabs (10) are spread by the guide bolt (4) in each case outwardly.

15. The arrangement as claimed in claim 14, **characterized in that** the spreading sockets (8) in the mounted position are pushed together until they mutually bear against one another.

## Revendications

1. Elément de liaison double (1) dévolu au raccordement par aboutage de deux pièces structurelles (2), comprenant
une broche de guidage (4) respectivement pourvue, des deux côtés d'un tronçon médian (5), d'un tronçon (7) s'amenuisant en direction de l'extrémité respective (6) de ladite broche, et
deux manchons expansibles (8) présentant notamment des structures identiques, qui sont guidés à coulissement sur la broche de guidage (4) et peuvent être animés, à chaque fois, de coulissements conjoints à partir d'une position extérieure extrême, vers le tronçon médian (5) de ladite broche, jusqu'à une position de montage dans laquelle les deux manchons expansibles (8) sont encliquetés à l'encontre d'un coulissement rétrograde, lesdits manchons expansibles (8) étant munis, à chaque fois, d'au moins une languette déployable (10) qui est déployée vers l'extérieur sous l'action de ladite broche de guidage (4), dans ladite position de montage,
**caractérisé par le fait**
**que** les manchons expansibles (8) sont respectivement dotés d'une région (11) formant douille présentant, dans la position extérieure extrême desdits manchons, un pourtour extérieur (15) non circulaire, notamment ovale ou elliptique qui, par compression de ladite région (11) formant douille le long de l'axe longitudinal dudit pourtour extérieur (15) non circulaire, en particulier le long de l'axe principal dudit pourtour extérieur ovale ou elliptique, peut être déformé en un pourtour extérieur (15') à circularité plus accentuée, notamment en un pourtour extérieur (15') respectivement circulaire ou approximativement circulaire ; et
par le fait que la région (11) formant douille est intérieurement pourvue d'une creusure d'encliquetage (17) dans au moins l'un des segments de douille (11b) qui, à l'état non déformé de ladite région (11) formant douille, ne font pas saillie vers l'extérieur au-delà du pourtour extérieur (15') de ladite région déformée (11) formant douille, sachant que, dans la position extérieure extrême des manchons, ladite creusure d'encliquetage (17) est crantée sur l'extrémité (6) de la broche à l'état non déformé de la région (11) formant douille, et n'est plus crantée sur ladite extrémité (6) de la broche, ou ne l'est plus que légèrement à l'état déformé de ladite région (11) formant douille.

2. Elément de liaison double selon la revendication 1, **caractérisé par le fait que** les deux manchons expansibles (8) portent l'un contre l'autre dans la position de montage.

3. Elément de liaison double selon la revendication 1 ou 2, **caractérisé par le fait que** les deux extrémités de la broche sont respectivement réalisées sous la forme d'une tête (6) de broche qui, dans la position de montage, emprisonne par-derrière le manchon expansible (8) considéré, avec effet de crantage, dans la direction (19) de coulissement conjoint dudit manchon.

4. Elément de liaison double selon l'une des revendications précédentes, **caractérisé par le fait que** le diamètre intérieur du pourtour extérieur (15'), respectivement circulaire ou approximativement circulaire, de la région déformée (11) formant douille correspond au diamètre du tronçon médian (5) de la broche.

5. Elément de liaison double selon l'une des revendications précédentes, **caractérisé par le fait que** la région (11) formant douille s'amenuise, vers l'arrière, au moins dans les segments de douille (11a) qui, à l'état non déformé de ladite région (11) formant douille, font saillie vers l'extérieur au-delà du pourtour extérieur (15') de ladite région déformée (11) formant douille.

6. Elément de liaison double selon l'une des revendications précédentes, **caractérisé par le fait que** le tronçon médian (5) de la broche est muni d'une butée (20) contre laquelle les deux manchons expansibles (8) peuvent être en applique dans la position de montage.

7. Elément de liaison double selon l'une des revendications précédentes, **caractérisé par le fait que**, dans la position de montage, la languette déployable (10) à présence minimale est animée, par sa face extrême postérieure (13), d'un coulissement en regard de l'extrémité de la broche réalisée sous la forme d'une tête (6) de broche et est emprisonnée par-derrière, par ladite extrémité, dans la direction respective (19) de coulissement conjoint.

8. Elément de liaison double selon l'une des revendications précédentes, **caractérisé par le fait que** la languette déployable (10) à présence minimale est dotée, sur ses faces extérieures, d'une nervure extérieure (14) s'étendant dans le sens transversal.

9. Elément de liaison double selon l'une des revendications précédentes, **caractérisé par le fait que** les manchons expansibles (8) sont respectivement pourvus de plusieurs languettes déployables (10) agencées, en particulier, avec symétrie de rotation tout autour de l'axe longitudinal (9) desdits manchons, sachant que les faces extrêmes postérieures (13) d'au moins quelques-unes des languettes déployables (10) du manchon expansible (8), notamment de toutes les languettes déployables (10) dudit manchon expansible (8), sont décalées à chaque fois les unes des autres dans le sens axial.

10. Elément de liaison double selon l'une des revendications précédentes, **caractérisé par le fait que** les manchons expansibles (8) sont munis à chaque fois, à leur extrémité antérieure, d'une collerette marginale (12) limitant l'insertion du manchon expansible (8) dans un alésage (3) de la pièce structurelle (2).

11. Elément de liaison double selon l'une des revendications précédentes, **caractérisé par le fait que** les manchons expansibles (8) sont emboîtés sur la broche de guidage (4).

12. Elément de liaison double selon l'une des revendications 1 à 10, **caractérisé par le fait que** ledit élément de liaison double (1) est réalisé sous la forme d'une pièce monobloc en matière plastique moulée par injection, dotée d'une broche de guidage (4) en matière plastique, ou sous la forme d'une pièce monobloc en matière plastique moulée par injection, présentant ladite broche de guidage (4) en tant que partie insérable.

13. Elément de liaison double selon l'une des revendications précédentes, **caractérisé par le fait que** les manchons expansibles (8) sont emplis de colle.

14. Agencement comprenant deux pièces structurelles (2) en applique l'une contre l'autre et un élément de liaison double (1) conforme à l'une des revendications précédentes inséré, par ses manchons expansibles (8), dans des alésages (3) desdites pièces structurelles (2), sachant que lesdits manchons expansibles (8) sont animés de coulissements conjoints sur la broche de guidage (4) et sont encliquetés dans cette position de montage, et sachant que les languettes déployables (10) sont respectivement déployées vers l'extérieur sous l'action de ladite broche de guidage (4).

15. Agencement selon la revendication 14, **caractérisé par le fait que** les manchons expansibles (8) sont animés de coulissements conjoints, dans la position de montage, jusqu'à la venue en applique mutuelle.
